# EUROPEAN PATENT SPECIFICATION

(11) **EP 3 561 933 B1**
(45) Date of publication and mention of the grant of the patent: **28.08.2024**
(21) Application number: 18198690.2
(22) Date of filing: 04.10.2018
(51) Int. Cl.: H01M 8/241, H01M 8/249, H01M 8/0271, H01M 8/0297, H01M 8/04007, H01M 8/0432, H01M 8/2432, H01M 8/242, H01M 8/1004, H01M 8/10, H01M 8/1018, H01M 8/00

(54) **HIGH-TEMPERATURE POLYMER ELECTROLYTE MEMBRANE FUEL CELL STACK FOR OPTIMIZING STACK OPERATION**
HOCHTEMPERATURPOLYMERELEKTROLYTMEMBRANBRENNSTOFFZELLENSTAPEL ZUR OPTIMIERUNG DES STAPELBETRIEBS
EMPILEMENT DE PILES À COMBUSTIBLE À MEMBRANE ÉLECTROLYTE POLYMÈRE À HAUTE TEMPÉRATURE POUR OPTIMISER LE FONCTIONNEMENT D'EMPILEMENTS

(30) Priority: 26.04.2018 KR 20180048538
(43) Date of publication of application: 30.10.2019
(73) Proprietor: Korea Institute of Energy Research, Daejeon 34129 (KR)
(72) Inventor: Kim, Min-jin, 34069 Daejeon (KR); Sohn, Young-jun, 34049 Daejeon (KR); Kim, Seung-gon, 34127 Daejeon (KR); Oh, Hwan Yeong, 34185 Daejeon (KR); Shin, Dong Won, 30150 Sejong-si (KR); Park, Gu-gon, 34049 Daejeon (KR); Bae, Byungchan, 34049 Daejeon (KR); Yim, Sung-dae, 34130 Daejeon (KR); Park, Seok-hee, 34049 Daejeon (KR); Yang, Tae-hyun, 34120 Daejeon (KR); Lee, Won-yong, 34032 Daejeon (KR); Kim, Chang-soo, 22310 Incheon (KR)
(74) Representative: J A Kemp LLP

(56) References cited:
- EP-A1- 2 413 422
- JP-A- H05 242 903
- US-A1- 2010 266 918
- US-A1- 2017 237 087

## Description

One or more example embodiments relate to a high-temperature polymer electrolyte membrane fuel cell (HT-PEMFC) stack for optimizing a stack operation.

A fuel cell is drawing attention as promising futuristic clean energy technology since the fuel cell is eco-friendly and has a high-efficiency, a high-power density, and the like. Here, research on a high-temperature polymer electrolyte membrane fuel cell (HT-PEMFC) is actively ongoing. The HT-PEMFC uses a polybenzimidazole (PBI)-based electrolyte membrane doped with phosphoric acid, and thus operates without a separate humidification. Also, a separate moisture trap is not required since water is generated in a vapor form through the operation of the HT-PEMFC. Furthermore, when operating the HT-PEMFC at operation temperature of 150°C to 180°C, a degradation in performance of a membrane electrode assembly (MEA) by CO poisoning may significantly decrease to be CO-resistant up to CO concentration 3%. Accordingly, a CO removal process may be minimized during a hydrogen reforming process. In addition, a relatively high outlet temperature close to 100°C may be obtained, which may lead to increasing use of thermal energy.

The HT-PEMFC may need to be further developed. Theoretically, the HT-PEMFC has a high electrochemical reaction rate. Practically, a performance of the developed HT-PEMFC may slightly not reach that of a low-temperature polymer electrolyte membrane fuel cell (LT-PEMFC). Also, the HT-PEMFC may have a relatively short durability and lifespan due to a harsh operation condition, for example, an exposure to phosphoric acid and a high temperature.

For example, when a portion of the HT-PEMFC is damaged under the operation condition, such as the high temperature, a coolant may penetrate the MEA. Thus, the performance of an HT-PEMFC stack may be degraded. Also, since an oil used as a coolant of the HT-PEMFC stack has a viscosity greater than that of water, the oil causes a high differential pressure in a circulation path, which may also lead to damage to the HT-PEMFC. Furthermore, since the oil used as the coolant of the HT-PEMFC stack operates at high temperature, the oil causes a change in a volume of a separator during a circulation in a coolant flow path formed in the separator of the HT-PEMFC, which may accelerate a damage.

In addition, when the HT-PEMFC operates under the operation condition, such as the high-temperature, a non-uniformity of temperature may occur in a stacking direction of the HT-PEMFC stack. The non-uniform temperature may decrease an efficiency of the HT-PEMFC.

JP-H05,242,903, which represents the closest prior art, discloses a fuel cell stack for optimizing a stack operation, the stack comprising: a coolant inlet configured to allow a coolant to flow in; a plurality of cooling plates configured to move the coolant that flows in through the coolant inlet; and a plurality of cell assemblies each provided between two cooling plates adjacent to each other among the plurality of cooling plates, and each cell assembly comprising a plurality of cell units, wherein at least a portion of the plurality of cell assemblies each comprises a different number of cell units.

EP-2,413,422 discloses a fuel cell stack in which the number of bipolar plates between two cooling plates is largest in the central region of the fuel cell stack, and is gradually less towards the first and second end plates, that is both ends of the fuel cell stack. In this arrangement, since the number of bipolar plates near the first and second end plates is small, the time for increasing the temperature of the bipolar plates near the first and second end plates can be reduced. Accordingly, the start-up time of the fuel cell stack can be reduced.

According to an aspect of the present invention, there is provided a high-temperature polymer electrolyte membrane fuel cell (HT-PEMFC) stack for optimizing a stack operation, the HT-PEMFC stack including: a coolant inlet configured to allow a coolant to flow in; a plurality of cooling plates configured to move the coolant that flows in through the coolant inlet; and a plurality of cell assemblies each provided between two cooling plates adjacent to each other among the plurality of cooling plates, and each cell assembly including a plurality of cell units, wherein in at least a portion of the plurality of cell assemblies closest to the coolant inlet, a number of cell units included in the cell assemblies of the portion of the plurality of cell assemblies decreases according to an increase in a distance between a corresponding cell assembly and the coolant inlet.

At least one example embodiment provides a high-temperature polymer electrolyte membrane fuel cell (HT-PEMFC) stack that may prevent a degradation in a performance and a durability from occurring due to a non-uniform temperature in a stack.

At least one example embodiment also provides an HT-PEMFC stack that may prevent a gas leakage from occurring due to a loose coupling of the stack.

The plurality of cooling plates may include: a plurality of first cooling plates; and a plurality of second cooling plates provided relatively distant from the coolant inlet compared to the plurality of first cooling plates, and the portion of the plurality of cell assemblies may include: one or more first cell assemblies provided between two first cooling plates adjacent to each other and including a first number of first cell units; and one or more second cell assemblies provided between two second cooling plates adjacent to each other and including a second number of second cell units, the second number being less than the first number.

The HT-PEMFC stack may further include: an end plate configured to press the plurality of first cooling plates, the plurality of second cooling plates, the first cell assembly, and the second cell assembly. The plurality of cooling plates may further include a plurality of third cooling plates provided closer to the end plate than the plurality of second cooling plates, and the plurality of cell assemblies may further include a third cell assembly provided between two third cooling plates adjacent to each other and including a third number of third cell units, the third umber being grater than the second number.

The end plate may include: a top end plate including the coolant inlet; and a bottom end plate provided to face the top end plate, the first cell assembly may be provided closer to the top end plate than the second cell assembly, and the third cell assembly may be provided closer to the bottom end plate than the second cell assembly.

The first cell assembly may include: a plurality of first cell units each including a membrane electrode bonding assembly (MEA); and a first dummy cell including a thermocouple and configured to stack in parallel with the plurality of cell units.

The first dummy cell may be provided between two first cell units provided in a middle of the plurality of fist cell units.

The second cell assembly may include: a plurality of second cell units each including an MEA; and a second dummy cell including a thermocouple and configured to stack in parallel with the plurality of cell units.

The first cell assembly may include: a plurality of first cell units each including an MEA; and an insulating member configured to surround the plurality of first cell units.

The HT-PEMFC stack may further include: a coolant hose configured to allow the coolant to flow in each of the plurality of first cooling plates and the plurality of second cooling plates. At least a portion of the insulating member may be provided between the plurality of the first cell units and the coolant hose.

The HT-PEMFC stack may further include: an end plate configured to press the plurality of first cooling plates and the plurality of first cell assemblies; and a surface pressure measuring device provided on one surface of the end plate and configured to measure a pressure applied to the plurality of first cooling plates and the plurality of first cell assemblies by the end plate.

The HT-PEMFC stack further including: a clamping bar configured to couple with the end plate; and a relief spring provided at an end of the clamping bar and configured to press the end plate. The surface pressure measuring device may be provided between the relief spring and the end plate.

A plurality of relief springs may be provided along an edge of the end plate, and the surface pressure measuring device may be provided below each of the plurality of relief springs.

Additional aspects of example embodiments will be set forth in part in the description which follows and, in part, will be apparent from the description, or may be learned by practice of the disclosure.

These and/or other features, and advantages of the invention will become apparent and more readily appreciated from the following description of example embodiments, taken in conjunction with the accompanying drawings of which:
FIG. 1 is a cross-sectional view illustrating a high-temperature polymer electrolyte membrane fuel cell (HT-PEMFC) stack according to an example embodiment;
FIG. 2 is a cross-sectional view illustrating an HT-PEMFC stack according to an example embodiment;
FIG. 3 is a cross-sectional view illustrating a portion of an HT-PEMFC stack according to an example embodiment;
FIG. 4 is an exploded perspective view illustrating a portion of an HT-PEMFC stack according to an example embodiment;
FIG. 5 is a cross-sectional view illustrating a portion of an HT-PEMFC stack according to an example embodiment;
FIG. 6 is a graph showing an enhancement in a temperature deviation using an HT-PEMFC according to an example embodiment;
FIG. 7 is a top view illustrating a dummy cell according to an example embodiment;
FIG. 8 is a side view illustrating a dummy cell according to an example embodiment; and
FIG. 9 is a top view illustrating an end plate according to an example embodiment.

Hereinafter, some example embodiments will be described in detail with reference to the accompanying drawings. Regarding the reference numerals assigned to the elements in the drawings, it should be noted that the same elements will be designated by the same reference numerals, wherever possible, even though they are shown in different drawings. Also, in the description of embodiments, detailed description of well-known related structures or functions will be omitted when it is deemed that such description will cause ambiguous interpretation of the present disclosure.

In addition, terms, such as first, second, A, B, (a), (b), and the like, may be used herein to describe components. Each of these terminologies is not used to define an essence, order or sequence of a corresponding component but used merely to distinguish the corresponding component from other component(s). It should be noted that if it is described in the specification that one component is "connected", "coupled", or "joined" to another component, a third component may be "connected", "coupled", and "joined" between the first and second components, although the first component may be directly connected, coupled, or joined to the second component.

A component having a common function with a component included in one example embodiment is described using a like name in another example embodiment. Unless otherwise described, a description made in one example embodiment may be applicable to another example embodiment and a detailed description within a duplicate range is omitted.

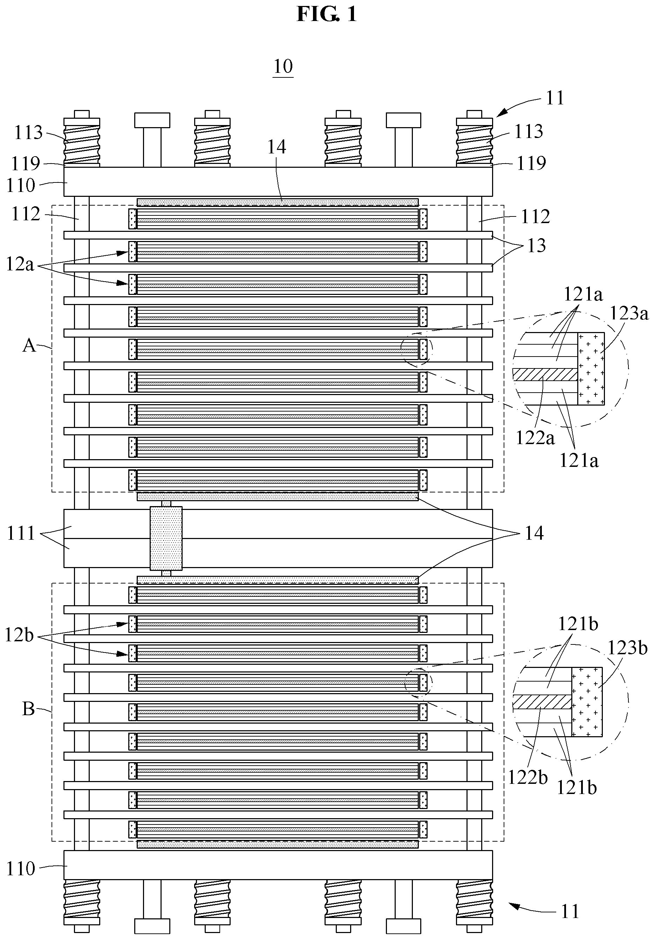

FIG. 1 is a cross-sectional view illustrating a high-temperature polymer electrolyte membrane fuel cell (HT-PEMFC) stack according to an example embodiment.

Referring to FIG. 1, an HT-PEMFC stack 10 according to an example embodiment, may include a support assembly 11, a first cell assembly 12a, a second cell assembly 12b, a plurality of cooling plates 13, and a current collector 14 configured to provide a produced current to an outside. The plurality of cooling plates 13 may include a plurality of first cooling plates provided on top surfaces or bottom surfaces of the first cell assemblies 12a, respectively, and a plurality of second cooling plates provided on top surfaces or bottom surfaces of the second cell assemblies 12b, respectively. The first cooling plate and the second cooling plate may not be different components and may be determined based on a cell assembly on which a corresponding cooling plate is provided between the first cell assembly 12a and the second cell assembly 12b. A cooling plate provided between the first cell assembly 12a and the second cell assembly 12b may be referred to as a first cooling plate or a second cooling plate.

The support assembly 11 may support and press the first cell assembly 12a, the second cell assembly 12b, and the plurality of cooling plates 13. The support assembly 11 may include an end plate 110, a middle end plate 111, a clamping bar 112, a relief spring 113, and surface pressure measuring devices 119.

The end plate 110 refers to a plate that is coupled with each of both ends of the HT-PEMFC stack 10 and may press other components provided between the two end plates 110. To optimize the utilization of a space, the end plate 110 may be in, for example, a rectangular shape. Although not illustrated, the end plate 110 may include a coolant inlet port and a coolant outlet port. For example, a single coolant inlet port and a single coolant outlet port may be provided to an end plate 110, or two coolant inlet ports and two coolant outlet ports may be provided to an end plate 110.

The middle end plate 111 refers to a plate that is provided at a center between the two end plates 110 and may enhance a fastening force. The HT-PEMFC stack 10 may operate at high temperature, and thus have a relatively great thermal expansion compared to that of a low-temperature PEMFC stack. Therefore, a probability that the first cell assembly 12a and/or the second cell assembly 12b are damaged by the thermal expansion may increase. To prevent such damage, it is possible to increase a thickness of a separator. Here, if the thickness of the separator increases, it may be difficult to maintain the fastening force with the two end plates 110. Thus, the middle end plate 111 may be additionally provided between the two end plates 110 to increase the fastening force.

The clamping bar 112 may be provided between the two end plates 110 or may be provided between each of the two end plates 110 and the middle end plate 111 and may fasten components provided between the two end plates 110. The clamping bar 112 may be provided to pass through at least a portion of the components provided between the two end plates 110 to properly align the components.

The relief spring 113 may be provided at an end of the clamping bar 112 and press the components provided between the two end plates 110 or between each of the two end plates 110 and the middle end plate 111. A pressure may be uniformly applied to the first cell assembly 12a and/or the second cell assembly 12b by adjusting a location and a length of the relief spring 113.

Surface pressure measuring devices 119 may be provided between the relief spring 113 and the end plate 110. Surface pressure measuring device 119 may measure the pressure applied to the components by the relief spring 113. A user may determine whether stack coupling is normally performed based on pressure information measured by the plurality of surface pressure measuring devices 119.

Each of the first cell assembly 12a and the second cell assembly 12b may be provided between the plurality of cooling plates 13, which may be performed a plurality of number of times. Accordingly, a plurality of first cell assemblies 12a and a plurality of second cell assemblies 12b may be provided. For example, referring to FIG. 1, nine first cell assemblies 12a may be provided above the middle end plate 111, and nine second cell assemblies 12b may be provided below the middle end plate 111. The first cell assembly 12a may be provided between the two cooling plates 13 adjacent to each other.

The first cell assembly 12a may include a plurality of first cell units 121a, a first dummy cell 122a, and a first insulating member 123a.

Each of the plurality of first cell units 121a may include a membrane electrode assembly (MEA) and two separators configured to surround a top and a bottom of the MEA, respectively.

The first dummy cell 122a may measure an operation temperature of the MEA. For example, the first dummy cell 122a may include a plurality of thermocouples. The first dummy cell 122a may be stacked in parallel with the plurality of first cell units 121a. The first dummy cell 122a may be formed of a material identical to that of the separator included in the plurality of first cell units 121a.

The first dummy cell 122a may be provided between the two first cell units 121a provided in the middle of the plurality of first cell units 121a. For example, if an even number of the plurality of first cell units 121a are present, the first dummy cell 122a may be provided between the two first cell units 121a that are provided in the middle. As another example, if an odd number of the plurality of the first cell units 121a are present, the first dummy cell 122a may be provided between any two of three first cell units 121a that are provided in the middle. Due to such arrangement, the first dummy cell 122a may be relatively less influenced by the cooling plate 13 adjacent thereto, and in this state, may measure a real-time temperature of the MEA.

A single first dummy cell 122a may be provided for each of the plurality of first cell assemblies 12a. In this case, a temperature distribution in the stack may be measured based on temperature information measured by each of the first dummy cells 122a.

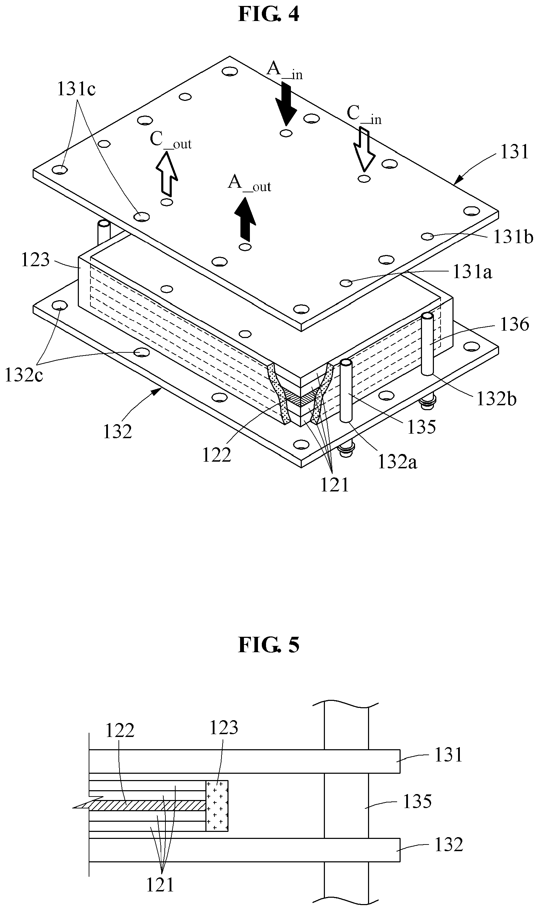

The first insulating member 123a may surround the plurality of first cell units 121a and the first dummy cell 122a. The first insulating member 123a may decrease an amount of heat that is generated in the plurality of first cell units 121a and transferred to a coolant hose 135 of FIG. 4. A temperature of a coolant to be transferred to the plurality of cooling plates 13 through the cooling hose 135 may be maintained to be relatively uniform due to the first insulating member 123a.

The second cell assembly 12b may include a plurality of second cell units 121b, a second dummy cell 122b, and a second insulating member 123b.

A number of the plurality of second cell units 121b of the second cell assembly 12b may be less than a number of the plurality of first cell units 121a of the first cell assembly 12a. For example, five first cell units 121a may be included in a single first cell assembly 12a, and four second cell units 121b may be include in a single second cell assembly 12b. An area of the first cell assembly 12a including the five cell units is indicated with A, an area of the second cell assembly 12b including the four cell units is indicated with B. That is, a cooling plate ratio of an upper portion is greater than that of an lower portion. Here, the lower portion refers to a portion located relatively distant from a coolant inlet through which a coolant flows in from an outside, and the upper portion refers to a portion located relatively closer to the coolant inlet. Through this, a temperature deviation in the stack may decrease through the above structure, and thus an efficiency of a fuel cell may increase. Also, decreases in a performance and a durability by a non-uniformity of temperature may be prevented.

The plurality of cooling plates 13 may be provided to remove heat generated in the HT-PEMFC stack 10, and may remove the heat generated in the first cell assembly 12a and the second cell assembly 12b by moving the coolant using an external manifold scheme.

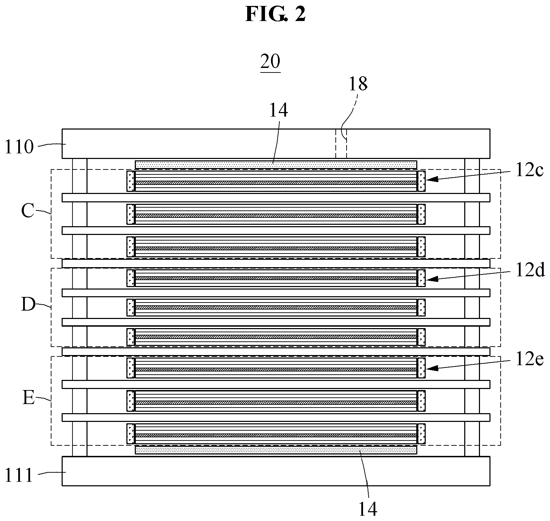

FIG. 2 is a cross-sectional view illustrating an HT-PEMFC stack according to an example embodiment.

Referring to FIG 2, an HT-PEMFC stack 20 may include end plate 110, middle end plate 111, a first cell assembly 12c, a second cell assembly 12d, a third cell assembly 12e, a plurality of cooling plates, a current collector 14, and a coolant inlet 18. The plurality of cooling plates may include a plurality of first cooling plates provided on top surfaces or bottom surfaces of the first cell assemblies 12c, respectively, a plurality of second cooling plate provided on top surfaces or bottom surfaces of the second cell assemblies 12d, respectively, a plurality of third cooling plates provided on top surfaces or bottom surfaces of the third cell assemblies 12e, respectively. The first cooling plate, the second cooling plate, and the third cooling plate may not be different components and may be determined based on a cell assembly on which a corresponding cooling plate is provided among the first cell assembly 12c, the second cell assembly 12d, and the third cell assembly 12e.

The end plate 110 and middle end plate 111 may include a top end plate including the coolant inlet 18, and a bottom end plate provided to face the top end plate. Herein, the end plate 110 may also be referred to as the top end plate, and the middle end plate 111 may also be referred to as the bottom end plate. A coolant may flow in the top end plate 110 through the coolant inlet 18 and be injected into the plurality of cooling plates.

The first cell assembly 12c may be provided closer to the top end plate 110 than the second cell assembly 12d. The third cell assembly 12e may be provided closer to the middle end plate 111 than the second cell assembly 12d. The first cell assembly 12c and the third cell assembly 12e are provided closer to the end plate 110 and middle end plate 111, respectively, and thus the end plate 110 and middle end plate 111 may absorb heat. Therefore, an appropriate temperature may be maintained. The second cell assembly 12d is provided relatively distant from the end plate 110 and middle end plate 111 compared to the first cell assembly 12c and the third cell assembly 12e. Thus, it is relatively difficult to maintain an appropriate temperature. Therefore, the second cell assembly 12d may include a number of cell units less than a number of cell units included in each of the first cell assembly 12c and the third cell assembly 12e. For example, the first cell assembly 12c may include five cell units, the second cell assembly 12d may include four cell units, and the third cell assembly 12e may include five cell units.

Through such a structure, it is possible to decrease a temperature deviation in the stack and to enhance an efficiency of a fuel cell. Also, it is possible to prevent a degradation in a performance and a durability by a non-uniform temperature.

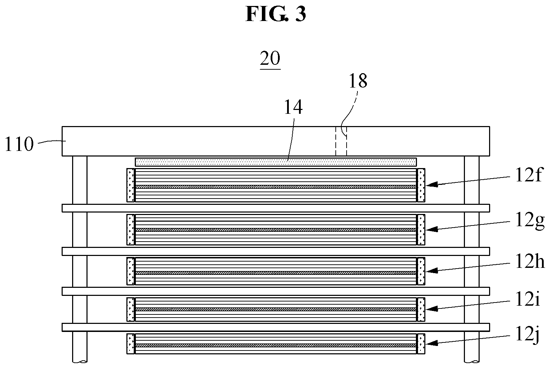

FIG. 3 is a cross-sectional view illustrating a portion of an HT-PEMFC stack according to an example embodiment.

Referring to FIG. 3, the HT-PEMFC stack 20 may include the end plate 110, a first cell assembly 12f, a second cell assembly 12g, a third cell assembly 12h, a fourth cell assembly 12i, a fifth cell assembly 12j, the current collector 14, a plurality of cooling plates, and the coolant inlet 18.

The first cell assembly 12f, the second cell assembly 12g, the third cell assembly 12h, the fourth cell assembly 12i, and the fifth cell assembly 12j may be arranged to be distant from the coolant inlet 18. For example, the first cell assembly 12f may be provided closest to the coolant inlet 18, and the fifth cell assembly 12j may be provided most distant from the coolant inlet 18.

A number of cell units included in at least a portion of a plurality of cell assemblies may gradually decrease according to an increase in a distance between a corresponding cell assembly and the coolant inlet 18. For example, the first cell assembly 12f may include nine cell units and a single dummy cell, the second cell assembly 12g may include eight cell units and a single dummy cell, the third cell assembly 12h may include seven cell units and a single dummy cell, the fourth cell assembly 12i may include six cell units and a single dummy cell, and the fifth cell assembly 12j may include five cell units and a single dummy cell. Through such a structure, it is possible to decrease a temperature deviation in the stack and to enhance an efficiency of a fuel cell. Also, it is possible to prevent a degradation in a performance and a durability by a non-uniform temperature.

FIG. 4 is an exploded perspective view illustrating a portion of an HT-PEMFC stack according to an example embodiment, and FIG. 5 is a cross-sectional view illustrating a portion of an HT-PEMFC stack according to an example embodiment.

Referring to FIGS. 4 and 5, a cell assembly is provided between two cooling plates 131 and 132. The cell assembly may include a plurality of cell units 121, a dummy cell 122, and an insulating member 123.

The cooling plate 131 attached on a top surface of the cell assembly may include an inlet hole and an outlet hole for hydrogen and oxygen, a plurality of holes 131c through which the plurality of clamping bars 112 of FIG. 1 passes, respectively, and holes 131a and 131b through which coolant hoses 135 and 136 pass, respectively. Similarly, the cooling plate 132 attached on a bottom surface of the cell assembly may include an inlet hole and an outlet hole for hydrogen and oxygen, a plurality of holes 132c through which the plurality of clamping bars 112 of FIG. 1 passes, respectively, and holes 132a and 132b through which the coolant hoses 135 and 136 pass, respectively.

Most heat emitted from the plurality of cell units 121 and the dummy cell 122, and transferred to coolant hoses 135 and 136 may be blocked by the insulating member 123.

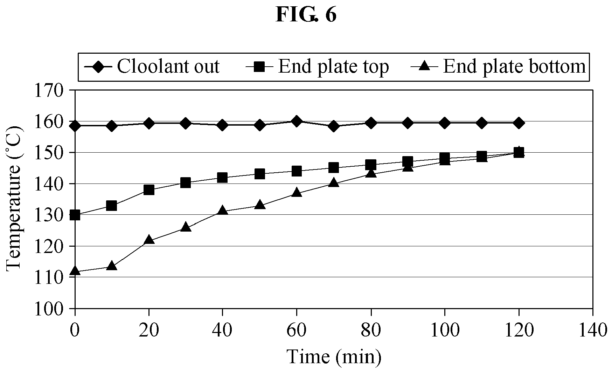

FIG. 6 is a graph showing an enhancement in a temperature deviation by an HT-PEMFC according to an example embodiment.

Referring to FIG. 6, a point in time at which a time is 0 indicates a point in time at which a heat-up ends in the HT-PEMFC stack and a reaction starts in an MEA. A temperature difference between a top end plate and a bottom end plate is about 20°C at the point in time at which the time is 0. In general, the bottom end plate is in direct contact with an external device and thus may have a temperature less than that of the top end plate due to a heat conduction. While the reaction continues in the MEA, a plurality of cooling plates may cool the MEA. In particular, an interval between the plurality of cooling plates may decrease according to an increase in a distance between a corresponding cooling plate and a coolant inlet or may decrease according to an increase in a distance between a corresponding cooling plate and each end plate. While the reaction continues in the MEA, each of the cooling plates may allow a temperature of the HT-PEMFC stack to be uniform through the above structure. Accordingly, referring to the graph, it can be verified that the temperature difference between the top end plate and the bottom end plate approaches about 0°C when 120 minutes elapses.

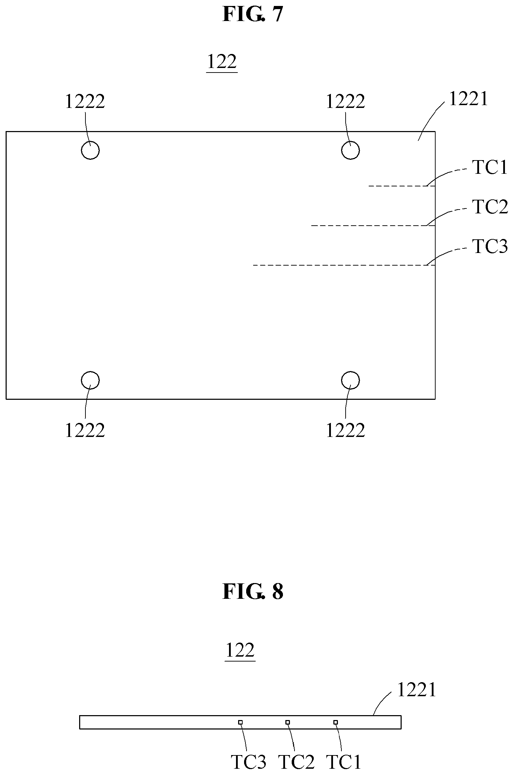

FIG. 7 is a top view illustrating a dummy cell according to an example embodiment, and FIG. 8 is a side view illustrating a dummy cell according to an example embodiment.

Referring to FIGS 7 and 8, a dummy cell 122 may include a dummy cell body 1221, a plurality of dummy cell holes 1222, and a plurality of thermocouples, for example, a first thermocouple TC1, a second thermocouple TC2, and a third thermocouple TC3.

The dummy cell body 1221 may have a shape corresponding to the cell unit 121a of FIG.1. For example, the dummy cell body 1221 may overlap the cell unit 121 in a stacking direction of a stack. For example, when the cell unit 121 has a bottom surface in a rectangular shape, the dummy cell body 1221 may also have a bottom surface in a rectangular shape identical thereto.

The plurality of dummy cell holes 1222 may communicate with a hydrogen inlet hole and outlet hole and an oxygen inlet hole and outlet hole included in the cell unit 121 of FIG. 4, respectively.

The plurality of thermocouples, for example, the first thermocouple TC1, the second thermocouple TC2, and the thermocouple TC3, may be inserted in the dummy cell body 1221 in a direction vertical to the stacking direction. Only one of the plurality of thermocouples, for example, the first thermocouple TC1, the second thermocouple TC2, and the thermocouple TC3, may be provided. Each of the plurality of thermocouples, for example, the first thermocouple TC1, the second thermocouple TC2, and the thermocouple TC3, may be inserted at a different depth, and may measure a temperature at a different location. For example, the thermocouple TC1 may measure a temperature of a portion that is a relatively edge, the third thermocouple TC3 may measure a temperature of a center portion, and the second thermocouple TC2 may measure a temperature between the first thermocouple TC1 and the third thermocouple TC3. In particular, the third thermocouple TC3 may measure a temperature of a center portion of a unit in which a reaction of the MEA most actively occurs.

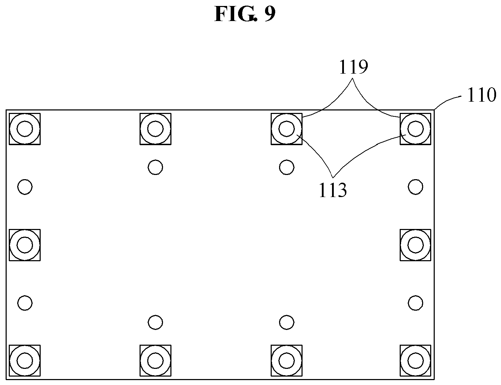

FIG. 9 is a top view illustrating an end plate according to an example embodiment.

Referring to FIG. 9, a plurality of relief springs 113, for example, ten relief springs, may be provided along an edge of the end plate 110. For example, when the end plate 110 is in a rectangular shape, four relief springs 113 may be provided along each long side of the end plate 110, and three relief springs 113 may be provided along each short side of the end plate 110. That is, the ten relief springs 113 may be provided.

The plurality of surface pressure measuring devices 119 may be provided below the relief springs 113, respectively. For example, when the plurality of relief springs 113 is provided along the edge of the end plate 110, the plurality of surface pressure measuring devices 119 may uniformly measure a pressure applied to the end plate 110. For example, when ten relief springs 113 are provided, ten surface pressure measuring devices 119 may also be provided. For example, when a pressure of a top left side is measured to be relatively low compared to a pressure applied to other portions of the end plate 110, a user may further rigidly fasten the relief spring 113 of the top left side to implement a normal coupling.

According to some example embodiments, it is possible to prevent a degradation in a performance and a durability from occurring due to a non-uniform temperature by maintaining a temperature in a stack to be uniform.

Also, according to some example embodiments, it is possible to measure a temperature in a membrane electrode assembly (MEA) during an actual operation using a dummy cell in a stack.

Also, according to some example embodiments, it is possible to decrease a non-uniformity of temperature in a stack by preventing a heat from being transferred to a coolant hose using an insulator provided between the stack and the coolant hose.

Also, according to some example embodiments, it is possible to prevent a gas leakage by verifying whether a stack is normally coupled using a plurality of surface pressure measuring devices provided to an end plate.

A number of example embodiments have been described above. Nevertheless, it should be understood that various modifications may be made to these example embodiments. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A high-temperature polymer electrolyte membrane fuel cell (HT-PEMFC) stack for optimizing a stack operation, the HT-PEMFC stack comprising:
a coolant inlet (18) configured to allow a coolant to flow in;
a plurality of cooling plates (13, 131, 132) configured to move the coolant that flows in through the coolant inlet (18); and
a plurality of cell assemblies (12a, 12b, 12c, 12d, 12e, 12f, 12g, 12h) each provided between two cooling plates adjacent to each other among the plurality of cooling plates (13, 131, 132), and each cell assembly comprising a plurality of cell units,
**characterized in that**
in at least a portion of the plurality of cell assemblies (12a, 12b, 12c, 12d, 12e, 12f, 12g, 12h) closest to the coolant inlet (18), a number of cell units included in the cell assemblies of the portion of the plurality of cell assemblies (12a, 12b, 12c, 12d, 12e, 12f, 12g, 12h) decreases according to an increase in a distance between a corresponding cell assembly and the coolant inlet (18).

2. The HT-PEMFC stack of any one of the preceding claims, wherein the plurality of cooling plates (13, 131, 132) comprises:
a plurality of first cooling plates; and
a plurality of second cooling plates provided relatively distant from the coolant inlet compared to the plurality of first cooling plates, and
the portion of the plurality of cell assemblies (12a, 12b, 12c, 12d, 12e, 12f, 12g, 12h) comprises:
one or more first cell assemblies provided between two first cooling plates adjacent to each other and comprising a first number of first cell units; and
one or more second cell assemblies provided between two second cooling plates adjacent to each other and comprising a second number of second cell units, the second number being less than the first number.

3. The HT-PEMFC stack of claim 2, further comprising:
an end plate (110) configured to press the plurality of first cooling plates, the plurality of second cooling plates, the first cell assembly, and the second cell assembly,
wherein the plurality of cooling plates (13, 131, 132) further comprises a plurality of third cooling plates provided closer to the end plate than the plurality of second cooling plates, and
the plurality of cell assemblies (12a, 12b, 12c, 12d, 12e, 12f, 12g, 12h) further comprises a third cell assembly provided between two third cooling plates adjacent to each other and comprising a third number of third cell units, the third number being greater than the second number.

4. The HT-PEMFC stack of claim 3, wherein the end plate (110, 111) comprises:
a top end plate (110) comprising the coolant inlet (18); and
a bottom end plate (110, 111) provided to face the top end plate,
the first cell assembly is provided closer to the top end plate (110) than the second cell assembly, and
the third cell assembly is provided closer to the bottom end plate (110, 111) than the second cell assembly.

5. The HT-PEMFC stack of any one of claims 2 to 4, wherein the first cell assembly comprises:
a plurality of first cell units each comprising a membrane electrode bonding assembly (MEA); and
a first dummy cell (122a) comprising a thermocouple and configured to stack in parallel with the plurality of first cell units.

6. The HT-PEMFC stack of claim 5, wherein the first dummy cell (122a) is provided between two first cell units provided in a middle of the plurality of first cell units.

7. The HT-PEMFC stack of claim 5 or 6, wherein the second cell assembly comprises:
a plurality of second cell units each comprising an MEA; and
a second dummy cell (122b) comprising a thermocouple and configured to stack in parallel with the plurality of second cell units.

8. The HT-PEMFC stack of any one of claims 2 to 7, wherein the first cell assembly comprises:
a plurality of first cell units each comprising an MEA; and
an insulating member configured to surround the plurality of first cell units.

9. The HT-PEMFC stack of claim 8, further comprising:
a coolant hose (135) configured to allow the coolant to flow in each of the plurality of first cooling plates and the plurality of second cooling plates,
wherein at least a portion of the insulating member is provided between the plurality of the first cell units and the coolant hose.

10. The HT-PEMFC stack of any one of the preceding claims, further comprising:
an end plate (110) configured to press the plurality of cooling plates (13, 131, 132) and the plurality of cell assemblies (12a, 12b, 12c, 12d, 12e, 12f, 12g, 12h); and
a surface pressure measuring device provided to the end plate (110) and configured to measure a pressure applied to the plurality of cooling plates (13, 131, 132) and the plurality of cell assemblies (12a, 12b, 12c, 12d, 12e, 12f, 12g, 12h) by the end plate (110).

11. The HT-PEMFC stack of claim 10, further comprising:
a clamping bar (112) configured to couple with the end plate (110); and
a relief spring (113) provided at an end of the clamping bar and configured to press the end plate (110),
wherein the surface pressure measuring device is provided between the relief spring and the end plate.

12. The HT-PEMFC stack of claim 11, wherein a plurality of relief springs (113) is provided along an edge of the end plate (110), and
the surface pressure measuring device is provided below each of the plurality of relief springs (113).

## Patentansprüche

1. Hochtemperatur-Polymerelektrolytmembran-Brennstoffzellen- (High-Temperature Polymer Electrolyte Membrane Fuel Cell, HT-PEMFC) Stapel zur Optimierung eines Stapelbetriebs, wobei der HT-PEMFC-Stapel umfasst:
einen Kühlmitteleinlass (18), der dafür konfiguriert ist, ein Kühlmittel einströmen zu lassen;
eine Vielzahl von Kühlplatten (13, 131, 132), die dafür konfiguriert ist, das Kühlmittel, das durch den Kühlmitteleinlass (18) einströmt, zu bewegen; und
eine Vielzahl von Zellanordnungen (12a, 12b, 12c, 12d, 12e, 12f, 12g, 12h), die jeweils zwischen zwei benachbarten Kühlplatten unter der Vielzahl von Kühlplatten (13, 131, 132) vorgesehen sind, wobei jede Zellanordnung eine Vielzahl von Zelleinheiten umfasst,
**dadurch gekennzeichnet, dass**
in mindestens einem Teil der Vielzahl von Zellanordnungen (12a, 12b, 12c, 12d, 12e, 12f, 12g, 12h), der dem Kühlmitteleinlass (18) am nächsten ist, eine Anzahl von Zelleinheiten, die in den Zellanordnungen des Teils der Vielzahl von Zellanordnungen (12a, 12b, 12c, 12d, 12e, 12f, 12g, 12h) enthalten sind, abnimmt entsprechend einer Zunahme des Abstands zwischen einer entsprechenden Zellanordnung und dem Kühlmitteleinlass (18).

2. HT-PEMFC-Stapel nach einem der vorhergehenden Ansprüche, wobei die Vielzahl der Kühlplatten (13, 131, 132) umfasst:
eine Vielzahl von ersten Kühlplatten; und
eine Vielzahl von zweiten Kühlplatten, die im Vergleich zu der Vielzahl von ersten Kühlplatten relativ weit vom Kühlmitteleinlass entfernt sind, und
wobei der Teil der Vielzahl von Zellanordnungen (12a, 12b, 12c, 12d, 12e, 12f, 12g, 12h) umfasst:
eine oder mehrere erste Zellanordnungen, die zwischen zwei ersten Kühlplatten nebeneinander angeordnet sind und eine erste Anzahl von ersten Zelleneinheiten umfassen; und
eine oder mehrere zweite Zellanordnungen, die zwischen zwei aneinander angrenzenden zweiten Kühlplatten vorgesehen sind und eine zweite Anzahl von zweiten Zelleneinheiten umfassen, wobei die zweite Anzahl geringer ist als die erste Anzahl.

3. HT-PEMFC-Stapel nach Anspruch 2, der ferner umfasst:
eine Endplatte (110), die dafür konfiguriert ist, die Vielzahl der ersten Kühlplatten, die Vielzahl der zweiten Kühlplatten, die erste Zelleneinheit und die zweite Zelleneinheit zu pressen,
wobei die Vielzahl von Kühlplatten (13, 131, 132) ferner eine Vielzahl von dritten Kühlplatten umfasst, die näher an der Endplatte vorgesehen sind als die Vielzahl von zweiten Kühlplatten, und
die Vielzahl von Zellanordnungen (12a, 12b, 12c, 12d, 12e, 12f, 12g, 12h) ferner eine dritte Zellanordnung umfasst, die zwischen zwei dritten Kühlplatten benachbart zueinander vorgesehen ist und eine dritte Anzahl von dritten Zelleinheiten umfasst, wobei die dritte Anzahl größer als die zweite Anzahl ist.

4. HT-PEMFC-Stapel nach Anspruch 3, wobei die Endplatte (110, 111) umfasst:
eine obere Endplatte (110), die den Kühlmitteleinlass (18) umfasst; und
eine untere Endplatte (110, 111), die so vorgesehen ist, dass sie der oberen Endplatte gegenüberliegt,
wobei die erste Zellanordnung näher an der oberen Endplatte (110) angeordnet ist als die zweite Zellanordnung, und
die dritte Zellanordnung näher an der unteren Endplatte (110, 111) angeordnet ist als die zweite Zellanordnung.

5. HT-PEMFC-Stapel nach einem der Ansprüche 2 bis 4, wobei die erste Zellanordnung umfasst:
eine Vielzahl von ersten Zelleinheiten, die jeweils eine Membran-Elektroden-Verbindungsanordnung (MEA) umfassen; und
eine erste Dummy-Zelle (122a), die ein Thermoelement umfasst und so konfiguriert ist, dass sie parallel zu der Vielzahl der ersten Zelleinheiten gestapelt werden kann.

6. HT-PEMFC-Stapel nach Anspruch 5, wobei die erste Dummy-Zelle (122a) zwischen zwei ersten Zelleinheiten vorgesehen ist, die in der Mitte der Vielzahl der ersten Zelleinheiten vorgesehen sind.

7. HT-PEMFC-Stapel nach Anspruch 5 oder 6, wobei die zweite Zellanordnung umfasst:
eine Vielzahl von zweiten Zelleinheiten, die jeweils eine MEA umfassen; und
eine zweite Dummy-Zelle (122b), die ein Thermoelement umfasst und dafür konfiguriert ist, parallel zu der Vielzahl der zweiten Zelleinheiten gestapelt zu werden.

8. HT-PEMFC-Stapel nach einem der Ansprüche 2 bis 7, wobei die erste Zellanordnung umfasst:
eine Vielzahl von ersten Zelleinheiten, die jeweils eine MEA umfassen; und
ein isolierendes Element, das so konfiguriert ist, dass es die Vielzahl der ersten Zelleinheiten umgibt.

9. HT-PEMFC-Stapel nach Anspruch 8, der ferner umfasst:
einen Kühlmittelschlauch (135), der so konfiguriert ist, dass das Kühlmittel in jede der Vielzahl von ersten Kühlplatten und der Vielzahl von zweiten Kühlplatten fließen kann,
wobei mindestens ein Teil des Isolierelements zwischen der Vielzahl der ersten Zelleneinheiten und dem Kühlmittelschlauch vorgesehen ist.

10. HT-PEMFC-Stapel nach einem der vorhergehenden Ansprüche, der ferner umfasst:
eine Endplatte (110), die dafür konfiguriert ist, die Vielzahl von Kühlplatten (13, 131, 132) und die Vielzahl von Zellanordnungen (12a, 12b, 12c, 12d, 12e, 12f, 12g, 12h) zu pressen; und
eine Oberflächendruckmessvorrichtung, die an der Endplatte (110) vorgesehen und dafür konfiguriert ist, einen Druck zu messen, der auf die Vielzahl von Kühlplatten (13, 131, 132) und die Vielzahl von Zellanordnungen (12a, 12b, 12c, 12d, 12e, 12f, 12g, 12h) durch die Endplatte (110) ausgeübt wird.

11. HT-PEMFC-Stapel nach Anspruch 10, der ferner umfasst:
eine Klemmstange (112), die zum Koppeln mit der Endplatte (110) konfiguriert ist; und
eine Entlastungsfeder (113), die an einem Ende der Klemmstange vorgesehen und dafür konfiguriert ist, die Endplatte (110) zu drücken,
wobei die Oberflächendruckmessvorrichtung zwischen der Entlastungsfeder und der Endplatte angeordnet ist.

12. HT-PEMFC-Stapel nach Anspruch 11, wobei eine Vielzahl von Entlastungsfedern (113) entlang einer Kante der Endplatte (110) vorgesehen ist, und
die Oberflächendruckmessvorrichtung unterhalb jeder der Vielzahl von Entlastungsfedern (113) angeordnet ist.

## Revendications

1. Empilement de piles à combustible à membrane électrolytique polymère à haute température (HT-PEMFC) pour l'optimisation d'un fonctionnement d'empilement, l'empilement HT-PEMFC comprenant :
une entrée de liquide de refroidissement (18) conçue pour permettre l'écoulement entrant d'un liquide de refroidissement ;
une pluralité de plaques de refroidissement (13, 131, 132) conçues pour déplacer le liquide de refroidissement qui s'écoule à travers l'entrée de liquide de refroidissement (18) ; et
une pluralité d'ensembles de piles (12a, 12b, 12c, 12d, 12e, 12f, 12g, 12h), chacun prévu entre deux plaques de refroidissement adjacentes l'une à l'autre parmi la pluralité de plaques de refroidissement (13, 131, 132), et chaque ensemble de piles comprenant une pluralité d'unités de piles, **caractérisé en ce que**
dans au moins une partie de la pluralité d'ensembles de piles (12a, 12b, 12c, 12d, 12e, 12f, 12g, 12h) la plus proche de l'entrée de liquide de refroidissement (18), un nombre d'unités de piles incluses dans les ensembles de piles de la partie de la pluralité d'ensembles de piles (12a, 12b, 12c, 12d, 12e, 12f, 12g, 12h) diminue en fonction d'une augmentation d'une distance entre un ensemble de piles correspondant et l'entrée de liquide de refroidissement (18).

2. Empilement HT-PEMFC selon l'une quelconque des revendications précédentes, dans lequel la pluralité de plaques de refroidissement (13, 131, 132) comprend :
une pluralité de premières plaques de refroidissement ; et
une pluralité de deuxièmes plaques de refroidissement prévues relativement distantes de l'entrée de liquide de refroidissement par rapport à la pluralité de premières plaques de refroidissement, et
la partie de la pluralité d'ensembles de piles (12a, 12b, 12c, 12d, 12e, 12f, 12g, 12h) comprend :
un ou plusieurs premiers ensembles de piles prévus entre deux premières plaques de refroidissement adjacentes l'une à l'autre et comprenant un premier nombre de premières unités de piles ; et
un ou plusieurs deuxièmes ensembles de piles prévus entre deux deuxièmes plaques de refroidissement adjacentes l'une à l'autre et comprenant un deuxième nombre de deuxièmes unités de piles, le deuxième nombre étant inférieur au premier nombre.

3. Empilement HT-PEMFC selon la revendication 2, comprenant en outre :
une plaque d'extrémité (110) conçue pour appliquer une pression sur la pluralité de premières plaques de refroidissement, la pluralité de deuxièmes plaques de refroidissement, le premier ensemble de piles, et le deuxième ensemble de piles,
dans lequel la pluralité de plaques de refroidissement (13, 131, 132) comprend en outre une pluralité de troisièmes plaques de refroidissement plus proches de la plaque d'extrémité que la pluralité de deuxièmes plaques de refroidissement, et
la pluralité d'ensembles de piles (12a, 12b, 12c, 12d, 12e, 12f, 12g, 12h) comprend en outre un troisième ensemble de piles prévu entre deux troisièmes plaques de refroidissement adjacentes l'une à l'autre et comprenant un troisième nombre de troisièmes unités de piles, le troisième nombre étant supérieur au deuxième nombre.

4. Empilement HT-PEMFC selon la revendication 3, dans lequel la plaque d'extrémité (110, 111) comprend :
une plaque d'extrémité supérieure (110) comprenant l'entrée de liquide de refroidissement (18) ; et
une plaque d'extrémité inférieure (110, 111) prévue pour faire face à la plaque d'extrémité supérieure,
le premier ensemble de piles est prévu plus proche de la plaque d'extrémité supérieure (110) que le deuxième ensemble de piles, et
le troisième ensemble de piles est prévu plus proche de la plaque d'extrémité inférieure (110, 111) que le deuxième ensemble de piles.

5. Empilement HT-PEMFC selon l'une quelconque des revendications 2 à 4, dans lequel le premier ensemble de piles comprend :
une pluralité de premières unités de piles comprenant chacune un ensemble de liaison électrodes-membrane (MEA) ; et
une première pile factice (122a) comprenant un thermocouple et conçue pour s'empiler en parallèle avec la pluralité de premières unités de piles.

6. Empilement HT-PEMFC selon la revendication 5, dans lequel la première pile factice (122a) est prévue entre deux premières unités de piles prévues dans un milieu de la pluralité de premières unités de piles.

7. Empilement HT-PEMFC selon la revendication 5 ou 6, dans lequel le deuxième ensemble de piles comprend :
une pluralité de deuxièmes unités de piles comprenant chacune un MEA ; et
une deuxième pile factice (122b) comprenant un thermocouple et conçue pour s'empiler en parallèle avec la pluralité de deuxièmes unités de piles.

8. Empilement HT-PEMFC selon l'une quelconque des revendications 2 à 7, dans lequel le premier ensemble de piles comprend :
une pluralité de premières unités de piles comprenant chacune un MEA ; et
un élément isolant conçu pour entourer la pluralité de premières unités de piles.

9. Empilement HT-PEMFC selon la revendication 8, comprenant en outre :
un tuyau de liquide de refroidissement (135) conçu pour permettre au liquide de refroidissement de s'écouler dans chacune de la pluralité de premières plaques de refroidissement et de la pluralité de deuxièmes plaques de refroidissement,
dans lequel au moins une partie de l'élément isolant est prévue entre la pluralité de premières unités de piles et le tuyau de refroidissement.

10. Empilement HT-PEMFC selon l'une quelconque des revendications précédentes, comprenant en outre :
une plaque d'extrémité (110) conçue pour appliquer une pression sur la pluralité de plaques de refroidissement (13, 131, 132) et la pluralité d'ensembles de piles (12a, 12b, 12c, 12d, 12e, 12f, 12g, 12h) ; et
un dispositif de mesure de pression de surface prévu sur la plaque d'extrémité (110) et conçu pour mesurer une pression appliquée à la pluralité de plaques de refroidissement (13, 131, 132) et à la pluralité d'ensembles de piles (12a, 12b, 12c, 12d, 12e, 12f, 12g, 12h) par la plaque d'extrémité (110).

11. Empilement HT-PEMFC selon la revendication 10, comprenant en outre :
une barre de serrage (112) conçue pour se coupler à la plaque d'extrémité (110) ; et
un ressort de détente (113) prévu à une extrémité de la barre de serrage et conçu pour appliquer une pression sur la plaque d'extrémité (110),
dans lequel le dispositif de mesure de pression de surface est prévu entre le ressort de détente et la plaque d'extrémité.

12. Empilement HT-PEMFC selon la revendication 11, dans lequel une pluralité de ressorts de détente (113) est prévue le long d'un bord de la plaque d'extrémité (110), et
le dispositif de mesure de pression de surface est prévu en dessous de chacun de la pluralité de ressorts de détente (113).
